# EUROPEAN PATENT SPECIFICATION

(11) **EP 0 706 053 B1**
(45) Date of publication and mention of the grant of the patent: **01.03.2000**
(21) Application number: 95115484.8
(22) Date of filing: 29.09.1995
(51) Int. Cl.: G01P 15/10, G01P 1/00

(54) **Acceleration sensor**
Beschleunigungsmessaufnehmer
Capteur d'accélération

(30) Priority: 04.10.1994 JP 26636694
(43) Date of publication of application: 10.04.1996
(73) Proprietor: MURATA MANUFACTURING CO., LTD., Nagaokakyo-shi Kyoto-fu 226 (JP)
(72) Inventor: Nakamura, Takeshi, Murata Manufacturing Co., Ltd., Nagaokakyo-shi, Kyoto-fu (JP)
(74) Representative: Schoppe, Fritz, Dipl.-Ing.

(56) References cited:
- EP-A- 0 614 087
- DE-U- 8 714 886

## Description

### BACKGROUND OF THE INVENTION

### 1. Field of the Invention

The present invention relates to an acceleration sensor, and particularly to an acceleration sensor using longitudinal vibration of a vibrator.

### 2. Description of Related Art

There have been known various acceleration sensors, and one of these acceleration sensors is disclosed in Japanese Laid-open Patent Application No. Hei-6-273438. In the conventional acceleration sensor as described above, there is a case where a vibrator is deformed due to expansion and contraction thereof when atmospheric temperature varies. The deformation of the vibrator causes variation of an output signal of a piezoelectric element, and thus a signal is erroneously outputted from a differential circuit. In such a case, the sensor erroneously detects application of acceleration even though no acceleration is actually applied. The output signal which is caused by the variation of the atmospheric temperature is not discriminable from an output signal based on acceleration.

EP-8-0614087 discloses an acceleration sensor of the type defined in the prior art portion of claim 1.

DE-U-8714886 discloses a sensor for detecting movements, the sensor comprising two hall generators and a permanent magnet. A first pole of the permanent magnet is arranged in close relationship to the first hall generator. The second pole of the permanent magnet is arranged in close relationship to the second hall generator. First and second differential amplifiers are provided for detecting outputs of the hall generators. A third differential amplifier connected to the outputs of the first and second differential amplifier controls a pulse forming circuit generating a rectangular voltage signal used for controlling a monitor device for displaying the movement of an object.

It is an object of the present invention to provide an acceleration sensor having an accurate output signal which is not affected by variations of the atmospheric temperature.

This object is achieved by an acceleration sensor in accordance with claim 1.

EP-A-0614087 discloses an acceleration sensor of the kind mentioned in the prior art portion of claim 1.

DE-U-8714886 discloses a similar acceleration sensor which also comprises two differential circuits for differentiating output signals of piezoelectric elements as well as a third differential circuit for differentiating the output signals of the first and second differential circuit. Further, this document teaches to provide an acceleration sensor with a hall generator and a permanent magnet in order to achieve a temperature compensation.

The invention is based on the object of providing an acceleration sensor of the above mentioned type having a temperature compensation.

This object is achieved by an acceleration sensor in accordance with claim 1.

### BRIEF DESCRIPTION OF THE DRAWINGS

- Fig. 1: is a diagram showing an embodiment of the present invention;
- Fig. 2: is a cross-sectional view showing a vibrator used in an acceleration sensor of Fig. 1;
- Fig. 3: is a diagram showing a deformation state of the vibrator when atmospheric temperature varies;
- Fig. 4: is a diagram showing a deformation state of the vibrator when acceleration is applied;
- Fig. 5: is a cross-sectional view showing a vibrator in another embodiment of the present invention;
- Fig. 6: is a cross-sectional view showing a vibrator in another embodiment of the present invention; and
- Fig. 7: is a diagram showing another embodiment of the present invention.

### DETAILED DESCRIPTION OF THE PREFERRED EMBODIMENTS

Preferred embodiments according to the present invention will be hereunder described with reference to the accompanying drawings.

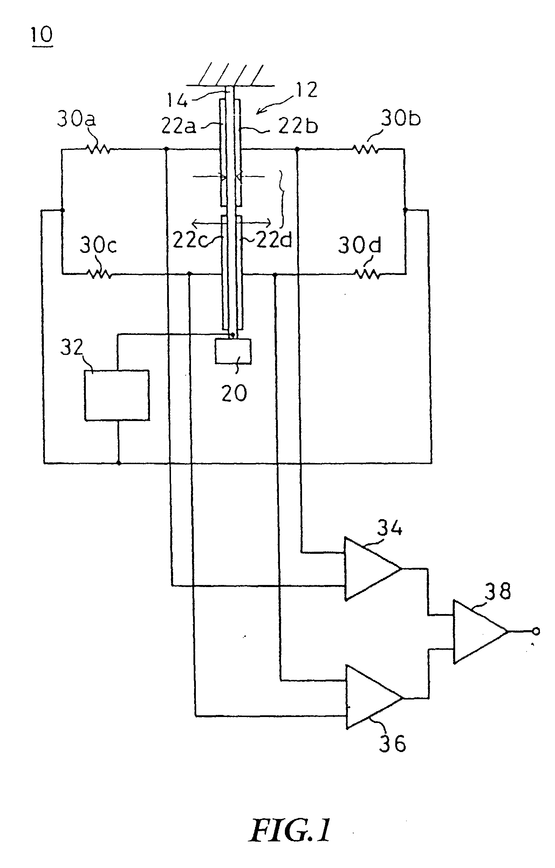

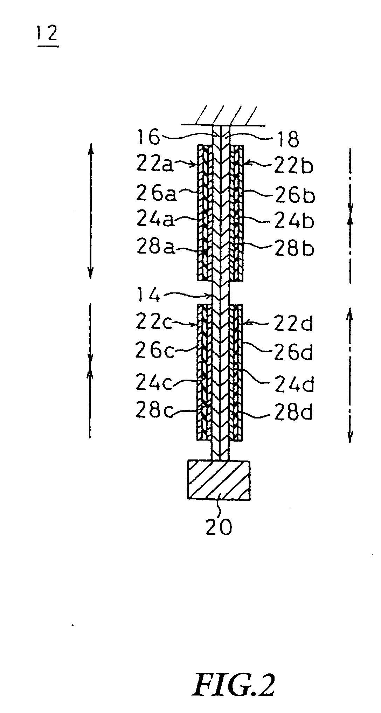

Fig. 1 is a schematic diagram showing an acceleration sensor of an embodiment of the present invention. An acceleration sensor 10 of this embodiment has an oscillator 12 including a plate-shaped vibrator 14. As shown in Fig. 2, the plate-shaped vibrator is formed by sticking two plate members 16 and 18 having different thermal expansion coefficients together, for example. A dead-weight 20 is provided at one end of the vibrator 14, and it is supported by a frame at the other end thereof.

As shown in Fig. 2, piezoelectric elements 22a, 22b, 22c and 22d are formed at both sides of the vibrator with respect to the center portion in the longitudinal direction of the vibrator 14. The piezoelectric elements 22a and 22b are disposed so as to confront each other through the vibrator 14, and the other piezoelectric elements 22c and 22d are also disposed so as to confront each other through the vibrator 14. The piezoelectric element 22a includes a piezoelectric plate 24a which is formed of piezoelectric ceramic material, for example. Electrodes 26a and 28a are formed on both surfaces of the piezoelectric plate 24a, and the electrode 28a is adhesively attached to the vibrator 14. Likewise, each piezoelectric element 22b (22c, 22d) includes a piezoelectric plate 24b (24c, 24d), and electrodes 26b and 28b (electrodes 26c and 28c, electrodes 26d and 28d) are formed on both surfaces of each piezoelectric plate 24b (24c, 24d). Furthermore, the electrodes 28b, 28c and 28d are adhesively attached to the vibrator 14. In the pair of confronting piezoelectric elements 22a and 22b, the piezoelectric plates 24a and 24b are polarized in a direction from the outside to the inside. Furthermore, in the pair of confronting piezoelectric elements 22c and 22d, the piezoelectric plates 24c and 24d are polarized in a direction from the inside to the outside.

The piezoelectric elements 22a, 22b, 22c and 22d are connected to resistors 30a, 30b, 30c and 30d respectively, and an oscillation circuit 32 is connected between the resistors 30a to 30d and the vibrator 14. The oscillation circuit 32 comprises an amplifier and a phase correction circuit. The output signal of the oscillation circuit 32 is supplied to the electrodes 26a to 26d of the piezoelectric elements 22a to 22d, and the signals from the electrodes 28a to 28d are fed back to the oscillation circuit 32 through the vibrator 14, so that the oscillator 12 is vibrated in its longitudinal direction by self-excited vibration.

In this embodiment, the piezoelectric plates 24a and 24b of the piezoelectric elements 22a and 22b are polarized in the direction from the outside to the inside while the piezoelectric plates 24c and 24d of the piezoelectric elements 22c and 22d are polarized in the direction from the inside to the outside. Accordingly, when the same signal is inputted to these piezoelectric elements 22a to 22d, the piezoelectric elements 22a and 22b are vibrated in the opposite direction to the piezoelectric elements 22c and 22d. Therefore, the vibrator 14 is vibrated such that the expansion and contraction motion is reversed at both sides of the vibrator with respect to the center portion thereof. In addition, the piezoelectric elements 22a and 22b are confronted to each other while the piezoelectric elements 22c and 22d are also confronted to each other, so that as one side of the vibrator 14 is expanded, the other side of the vibrator 14 is contracted as indicated by a solid line of Fig. 2. Conversely, as one side of the vibrator 14 is contracted , the other side is expanded as indicated by a one-dotted line of Fig. 2. With this vibrational motion, the vibrator 14 can be vibrated in its longitudinal direction while the total length of the vibrator 14 is unvaried. Such a vibration supplies the vibrator 14 with inertia. When the vibrator 14 is bent due to acceleration, the resonance frequencies of the front and back surfaces of the vibrator 14 become different, and thus an output signal which is different in phase from the input signal is obtained.

The confronting piezoelectric elements 22a and 22b are connected to input terminals of the first differential circuit 34, and the other confronting piezoelectric elements 22c and 22d are connected to input terminals of the second differential circuit 36. The output terminals of the two differential circuits 34 and 36 are connected to input terminals of the third differential circuit 38. In this acceleration sensor 10, the phase difference of the signals which are produced in the piezoelectric elements 22a and 22b by the vibration of the vibrator 14 is detected by the first differential circuit 34, and the phase difference of the signals which are produced in the piezoelectric elements 22c and 22d by the vibration of the vibrator 14 is detected by the second differential circuit 36. Furthermore, the phase difference between the output signals of the first and second differential circuits 34 and 36 is detected by the third differential circuit 38.

When no acceleration is applied to the acceleration sensor 10, the same signal occurs in the piezoelectric elements 22a and 22b, and thus no signal is outputted from the first differential circuit 34. Furthermore, in this case the same signal occurs in the piezoelectric elements 22c and 22d, and thus no signal is outputted from the second differential circuit 36. Therefore, no signal is outputted from the third differential circuit 38, and thus it is detected that no acceleration is applied to the acceleration sensor (that is, the acceleration sensor is not accelerated).

When the acceleration is applied to the acceleration sensor 10, inertia force acts on the vibrator 14 and the dead-weight 20, and the vibrator 14 is bent, so that there occurs a phase difference between the signals occurring in the piezoelectric elements at the outside of the bent vibrator 14 and the signals occurring in the piezoelectric elements at the inside of the bent vibrator 14. Accordingly, signals are outputted from the first and second differential circuits 34 and 36, and thus a signal is also outputted from the third differential circuit 38. The output signal from the third differential circuit 38 corresponds to the acceleration, and thus the acceleration can be detected by measuring the output signal of the third differential circuit 38. In this case, since the same driving sinal is supplied to the piezoelectric elements 22a to 22d, a driving signal component is offset between the first and second differential circuits 34 and 36. Accordingly, the driving signal component is not outputted from the third differential circuit 38 irrespective of presence or absence of the acceleration.

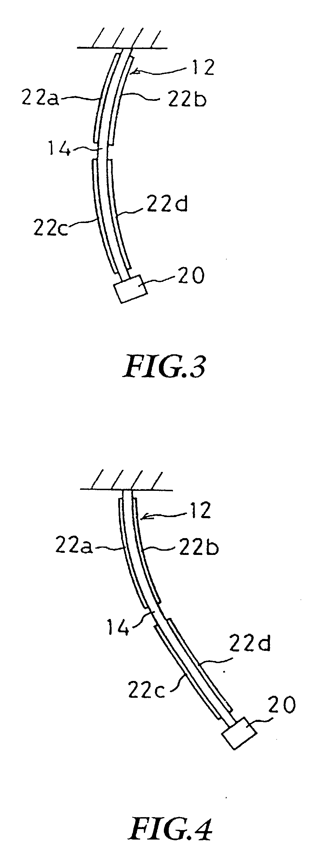

When no acceleration is applied to the acceleration sensor 10, the vibrator 14 is not bent. However, since the vibrator 14 is formed by sticking the two plate members 16 and 18 having different thermal expansion coefficients together, the vibrator is bent at a constant curvature in accordance with variation of atmospheric temperature as shown in Fig. 3 like bimetal. Since the vibrator 14 is bent at a constant curvature, the signals occurring in the piezoelectric elements 22a and 22c at the outside of the bent vibrator 14 have the same phase. Likewise, the signals occurring in the piezoelectric elements 22b and 22d at the inside of the bent vibrator 14 have the same phase. Accordingly, the output signal of the first differential circuit 34 is equal to the output signal of the second differential circuit 36, so that the output signal of the first differential circuit 34 and the output signal of the second differential circuit 36 are offset in the third differential circuit 38. Accordingly, no signal is outputted from the third differential circuit 38, and even when the atmospheric temperature varies, it can be prevented from being erroneously detected as a signal due to acceleration.

Furthermore, as described above, one end of the vibrator 14 is secured to the dead-weight 20 and the other end of the vibrator 14 is mounted on a frame. Accordingly, when acceleration is applied, the vibrator 14 at the mount portion is more greatly bent while the vibrator 14 at the dead-weight side is not so greatly bent as shown in Fig. 4, so that the output signals of the piezoelectric elements 22a and 22c at the outside of the bent vibrator 14 have different phases, and likewise the piezoelectric elements 22b and 22d at the inside of the bent vibrator 14 also have different phases. Therefore, the output signals of the first and second differential circuits 34 and 36 have different phases and thus the signal corresponding to the acceleration is outputted from the third differential circuit 38.

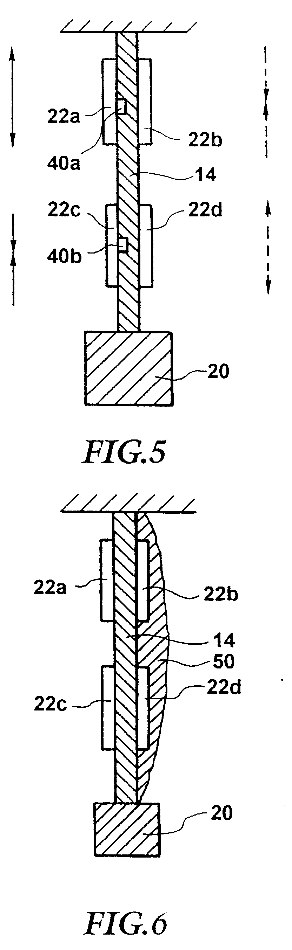

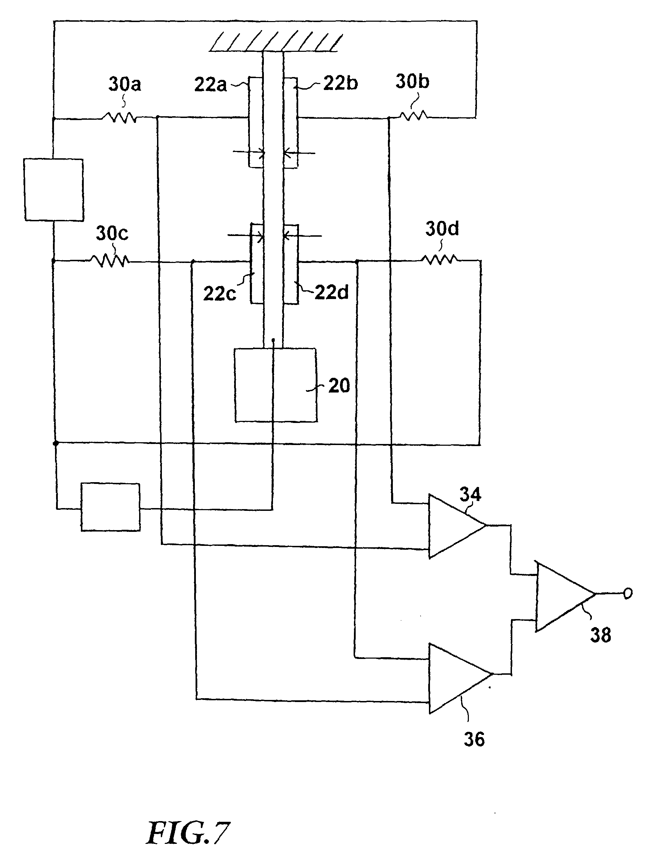

As described above, in the acceleration sensor 10 thus constructed, the vibrator 14 is uniformly deformed in accordance with variation of atmospheric temperature, so that the signals due to the variation of the atmospheric temperature can be offset by each other. Accordingly, even when the acceleration sensor 10 is mounted in a temperature-variable place, the acceleration can be accurately measured. In addition, since the vibrator 14 is longitudinally vibrated without varying its total length, the vibrator 14 can be easily supported and the leakage of vibration is little. Therefore, the acceleration can be detected with high sensitivity. In the above-mentioned embodiment, the vibrator 14 is formed by sticking the plate members having different thermal expansion coefficients together. In place of this method, the vibrator 14 may be formed by a method of partially forming recess portions 40a and 40b in a plate-shaped vibrator to partially vary the thickness of the vibrator as shown in Fig. 5, or a method of attaching material 50 having large thermal expansion coefficient (well-known material may be used in accordance with its use purpose) to a vibrator which is formed of a plate member as shown in Fig. 6. Furthermore, in the above-mentioned embodiment, the piezoelectric elements 22a, 22b and the piezoelectric elements 22c, 22d are polarized in the opposite direction to each other. However, all the piezoelectric elements 22a to 22d may be polarized in the same direction, for example, in a direction from the outside to the inside as shown in Fig. 7. In this case, the piezoelectric elements 22a, 22b and the piezoelectric elements 22c, 22d may be supplied with opposite-phase driving signals respectively to induce such a vibration that the expansion and contraction movement of the vibrator is reversed at both sides thereof with respect to the center portion thereof.

## Claims

1. An acceleration sensor (10), including:
a plate-shaped vibrator (14);
plural piezoelectric elements (22a, 22b, 22c, 22d) which are arranged so as to confront each other through the vibrator (14) at plural positions;
an oscillation circuit (32) for supplying said piezoelectric elements (22a, 22b, 22c, 22d) with such a driving signal as to cause said vibrator (14) to have such a longitudinal vibration that an expansion and contraction movement of said vibrator (14) is opposite between both sides of said vibrator (14) with respect to the center portion in the longitudinal direction thereof;
a first differential circuit (34) for differentiating the output signals of a pair of piezoelectric elements (22a, 22b) which are confronted to each other;
a second differential circuit (36) for differentiating the output signals of another pair of piezoelectric elements (22c, 22d) which are confronted to each other;
characterized in
that the acceleration sensor (10) further includes:
a third differential circuit (38) for differentiating the output signals of said first and second differential circuits; and
means (16, 18; 40a, 40b; 50) for nulling the difference between the output signals of said first and second differential circuits which is caused by variation of atmospheric temperature or for nulling the output signal of said third differential circuit which is caused by variation of atmospheric temperature;
and
that said plate-shaped vibrator (14) is formed
- by sticking two members (16, 18) of different thermal expansion coefficients together, or
- by providing recess portions (40a, 40b) in said plate-shaped vibrator (14) to vary its thickness, or
- by attaching material (50) having large thermal expansion coefficient to said plate-shaped vibrator (14).

2. The acceleration sensor (10) as claimed in claim 1, characterized in that said vibrator (14) is provided with a dead-weight (20) at one end thereof.

3. The acceleration sensor (10) as claimed in claim 1 or 2, characterized in that two pairs of said piezoelectric elements (22a, 22b, 22c, 22d) are provided so that the piezoelectric elements (22a, 22b, 22c, 22d) of each pair confront each other, and one pair (22a, 22b) of the piezoelectric elements are polarized in a direction from the outside to the inside while the other pair (22c, 22d) of the piezoelectric elements are polarized in a direction from the inside to the outside.

## Patentansprüche

1. Ein Beschleunigungssensor (10) mit folgenden Merkmalen:
einem plattenförmigen Vibrator (14);
mehreren piezoelektrischen Elementen (22a, 22b, 22c, 22d), die angeordnet sind, um einander durch den Vibrator (14) an mehreren Positionen gegenüberzuliegen;
einer Oszillationsschaltung (32) zum Zuführen eines solchen Treibsignals zu den piezoelektrischen Elementen (22a, 22b, 22c, 22d), um zu bewirken, daß der Vibrator (14) eine solche Längsvibration aufweist, daß eine Ausdehnungs- und Zusammenziehungsbewegung des Vibrators (14) zwischen beiden Seiten des Vibrators (14) bezüglich des Mittelabschnitts in der Längsrichtung desselben entgegengesetzt sind;
einer ersten Differenzschaltung (34) zum Bilden einer Differenz zwischen den Ausgangssignalen eines Paars von piezoelektrischen Elementen (22a, 22b), die einander gegenüberliegen;
einer zweiten Differenzschaltung (36) zum Bilden einer Differenz zwischen den Ausgangssignalen eines weiteren Paars von piezoelektrischen Elementen (22c, 22d), die einander gegenüber liegen;
dadurch gekennzeichnet, daß
der Beschleunigungssensor (10) ferner folgende Merkmale aufweist:
eine dritte Differenzschaltung (38) zum Bilden einer Differenz der Ausgangssignale der ersten und der zweiten Differenzschaltung; und
eine Einrichtung (16, 18; 40a, 40b; 50) zum Nullabgleichen der Differenz zwischen den Ausgangssignalen der ersten und der zweiten Differenzschaltung, die durch eine Variation der atmosphärischen Temperatur bewirkt wird, oder zum Nullabgleichen des Ausgangssignals der dritten Differenzschaltung, das durch eine Variation der atmosphärischen Temperatur bewirkt wird;
und,
daß der plattenförmige Vibrator (14)
- durch Verkleben von zwei Baugliedern (16, 18) mit unterschiedlichen thermischen Ausdehnungskoeffizienten, oder
- durch Vorsehen von Ausnehmungsabschnitten (40a, 40b) in dem plattenförmigen Vibrator (14), um die Dicke desselben zu variieren, oder
- durch Befestigen von Material (50) mit einem großen thermischen Ausdehnungskoeffizienten an dem plattenförmigen Vibrator (14)
gebildet ist.

2. Der Beschleunigungssensor (10) gemäß Anspruch 1, dadurch gekennzeichnet, daß der Vibrator (14) mit einem Totgewicht (20) an einem Ende desselben versehen ist.

3. Der Beschleunigungssensor (10) gemäß Anspruch 1 oder 2, dadurch gekennzeichnet, daß zwei Paare der piezoelektrischen Elemente (22a, 22b, 22c, 22d) derart vorgesehen sind, daß die piezoelektrischen Elemente (22a, 22b, 22c, 22d) jedes Paars einander gegenüberliegen, und daß ein Paar (22a, 22b) der piezoelektrischen Elemente in einer Richtung von außen nach innen polarisiert ist, während das andere Paar (22c, 22d) der piezoelektrischen Elemente in einer Richtung von innen nach außen polarisiert ist.

## Revendications

1. Capteur d'accélération (10), comprenant :
un vibreur sous forme de plaque (14) ;
plusieurs éléments piézo-électriques (22a, 22b, 22c, 22d) qui sont disposés en vis-à-vis les uns des autres de part et d'autre du vibreur (14) en différentes positions;
un circuit d'oscillation (32) afin d'alimenter lesdits éléments piézo-électriques (22a, 22b, 22c, 22d) avec un circuit de commande de manière à provoquer une vibration longitudinale dudit vibreur (14), de telle sorte qu'un mouvement de dilatation et de contraction dudit vibreur (14) soit opposé entre les deux côtés dudit vibreur (14) par rapport à la partie centrale selon la direction longitudinale de celui-ci ;
un premier circuit différentiel (34) afin de différentier les signaux de sortie d'une paire d'éléments piézo-électriques (22a, 22b) qui sont en vis-à-vis l'un de l'autre ;
un second circuit différentiel (36) afin de différentier les signaux de sortie d'une autre paire d'éléments piézo-électriques (22c, 22d) en vis-à-vis l'un de l'autre ;
caractérisé
en ce que le capteur d'accélération (10) comprend en outre :
un troisième circuit différentiel (38) afin de différentier les signaux de sortie desdits premier et second circuits différentiels ; et
des moyens (16, 18 ; 40a, 40b ; 50) afin d'annuler la différence entre les signaux de sortie desdits premier et second circuits différentiels qui est provoquée par une variation de la température atmosphérique ou pour annuler le signal de sortie dudit troisième circuit différentiel qui est provoqué par une variation de la température atmosphérique ; et
en ce que ledit vibreur sous forme de plaque (14) est formé
- en collant l'un à l'autre deux éléments (16, 18) de coefficients de dilatation thermique différents, ou
- en prévoyant des parties évidées (40a, 40b) dans ledit vibreur sous forme de plaque (14) pour modifier son épaisseur, ou
- en fixant un matériau (50) possédant un coefficient de dilatation thermique important audit vibreur sous forme de plaque (14).

2. Capteur d'accélération (10) selon la revendication 1, caractérisé en ce que ledit vibreur (14) est muni d'un poids mort (20) à l'une de ses extrémités.

3. Capteur d'accélération (10) selon la revendication 1 ou 2, caractérisé en ce que deux paires desdits éléments piézo-électriques (22a, 22b, 22c, 22d) sont prévues de sorte que les éléments piézo-électriques (22a, 22b, 22c, 22d) de chaque paire sont en vis-à-vis l'un de l'autre, et une paire (22a, 22b) des éléments piézo-électriques sont polarisés dans une direction allant de l'extérieur vers l'intérieur, tandis que l'autre paire (22c, 22d) des éléments piézo-électriques sont polarisés dans une direction allant de l'intérieur vers l'extérieur.
